# EUROPEAN PATENT APPLICATION

(11) **EP 4 148 342 A1**
(43) Date of publication of application: **15.03.2023**
(21) Application number: 21196369.9
(22) Date of filing: 13.09.2021
(51) Int. Cl.: F24T 10/20

(54) **A METHOD AND SYSTEM FOR OPERATING A GEOTHERMAL HEAT MINING SYSTEM**

(71) Applicant: VITO NV, 2400 Mol (BE)
(72) Inventor: FRANAER, Dirk, 2400 Mol (BE); BROOTHAERS, Matsen, 2400 Mol (BE); LAENEN, Ben, 2400 Mol (BE)
(74) Representative: V.O.

(57) **Abstract**

The invention relates to a method and system for operating a geothermal heat mining system (3), the heat mining system (3) comprising a production line (5) through which geothermal energy is conveyed towards the earth surface using a transfer medium, an energy recovery arrangement (9) for recovering energy from the conveyed transfer medium by heat exchange, and a reinjection unit (11) for injecting back, after heat exchange, the transfer medium into earth through at least one return line (13), wherein a pressure retaining unit (15) is provided configured to retain pressure on the return line (13) in case of an operational interruption of the geothermal heat mining system (3).

## Description

### FIELD OF THE INVENTION

The invention relates to a method and system for operating a geothermal heat mining system. The invention also related to a pressure maintaining unit for use in a geothermal mining system. Furthermore, the invention relates to a computer program product.

### BACKGROUND TO THE INVENTION

Geothermal energy is the energy that comes from geological heat sources. Natural heat beneath the earth surface is a result of thermal energy released by the natural nuclear decay processes of radioactive elements such as uranium, thorium and potassium. The temperature rises gradually when going deeper beneath the earth surface. Geothermal mining is widely used for exploiting the geothermal gradient. Extracting and using the natural heat of the earth may require identifying geothermal reservoirs. A transfer medium, such as brine may be conveyed through a production well towards the earth surface. The conveyed brine carries heat which can be recovered by means of a geothermal mining installation. Subsequently, after energy extraction, the brine is injected back via a reinjection well. The pressure needed for reinjection may be relatively large, depending on the properties of the ground layers. In many cases, the pressure is larger than 100 bar.

The geothermal heat mining system may have significant negative impact on the surrounding area due to induced seismic activity or earthquakes. Such detrimental seismic activity may cause damage at the earth's surface and thereby increase liability and complicate permitting. Furthermore, the operation of the geothermal heat mining system may have to be halted for a certain period of time because of the induced earthquakes, for instance in order to prevent further damage. The risk of detrimental seismic activities or earthquakes may be significantly increased as a result of higher reinjection pressures.

Preventing seismic activity may necessitate advanced monitoring equipment and control systems. Such arrangements may make the system overcomplicated resulting in high costs. In some cases, the operation of the geothermal heat mining system is slowed down or even completely stopped when seismic activities become more probable based on the monitoring equipment and control systems. Multiple reinjection wells may reduce the risk of seismic activity, however, such a solution is often very costly and may require significantly more maintenance.

There is a need for improved operation of the geothermal mining system such as to better prevent detrimental induced seismic activities.

### SUMMARY OF THE INVENTION

It is an object of the invention to provide for a method and a system that obviates at least one of the above mentioned drawbacks.

Additionally or alternatively, it is an object of the invention to provide for an enhanced operation of a geothermal mining system.

Additionally or alternatively, it is an object of the invention to provide for a mechanism to effectively reduce the risk of induced detrimental seismicity resulting from the operation of a geothermal mining system.

Additionally or alternatively, it is an object of the invention to improve the efficiency of geothermal mining systems.

Additionally or alternatively, it is an object of the invention to increase predictability of induced seismic act Thereto, the invention provides for a method of operating a geothermal heat mining system, the heat mining system comprising a production line through which geothermal energy is conveyed towards the earth surface using a transfer medium, an energy recovery arrangement for recovering energy from the conveyed transfer medium by heat exchange, and a reinjection unit for injecting back, after heat exchange, the transfer medium into earth through at least one return line, wherein a pressure retaining unit is provided configured to retain pressure on the return line in case of an operational interruption of the geothermal heat mining system.

The pressure retaining unit provides significant benefits in the operation of the geothermal mining system. The pressure retaining unit is adapted to provide additional pressure to the return line in order to prevent too sudden pressure drops which could induce seismic activity. In this way, the pressure retaining unit can effectively keep the return line under pressure such as to prevent induced seismic activity resulting from intended or unintended operational interruption.

As a result of the operational interruption of the geothermal heat mining system, pressing back of transfer medium via the return line by means of the reinjection unit may be stopped, resulting in loss of pressure over time. The pressure retaining unit may be configured to pressurize the return line in case of the operational interruption. For this purpose it may provide additional pressure to the return line in order to compensate for loss of pressure over time. This compensation for loss of pressure, may significantly reduce the risk of seismic activities.

In the normal operation of a geothermal heat mining system, a relatively large pressure may have to be applied by means of the reinjection unit in order to pump the transfer medium back into earth via the return line, for instance pressures larger than 100 bar, adverse seismic effects may be induced. The reinjection pressure and its fluctuations may have a relationship with induced seismicity. In some cases the seismicity may have a Richter magnitude larger than 2, which can have substantial impact on the surrounding area. Moreover, often the induced seismic activity occurs a few hours or even a couple of days after the sudden pressure drop in the return line due to geological phenomenon (cf. Kaiser effect). Hence, larger pressures employed for reinjection of the transfer medium and sudden stop of the operation of the geothermal heat mining system may likely cause detrimental seismic activity. The pressure retaining unit can effectively prevent such induced detrimental seismic activity by acting on the pressure inside the return line, even when the operation of the geothermal heat mining system is stopped.

Optionally, in case of the operational interruption, a fluid is injected in the at least one return line by means of the pressure retaining unit.

By injection of additional fluid into the return line, losses of fluid due to natural draining in the return line can be compensated, such that additional pressure compensation can be provided to the return line. Natural draining may occur due to the flow of liquid in the return line to the natural reservoir.

Optionally, the pressure retaining unit is configured to modulate the pressure drop in time resulting from the operational interruption of the geothermal heat mining system.

By slowing down the pressure drop in function of time, detrimental seismic activity may be prevented. Too sudden pressure drop may result in increased seismic activity. The pressure retaining unit may be configured to at least partially compensate for pressure loss in the return line, resulting in less quickly reduction of the pressure in the return line. This can be performed by injecting fluid such as brine to the at least one return line.

Optionally, the pressure retaining unit is configured to keep the pressure within a predetermined range, for at least a predetermined period of time by injecting fluid into the at least one return line.

By keeping the pressure in the predetermined range, the seismic activity may be effectively prevented. This predetermined range may be close to the pressure in the return line during normal operation of the geothermal heat mining system. The pressure retaining unit may result in a more gradual pressure drop in the return line by keeping the pressure within the predetermined range.

Optionally, the pressure retaining unit is configured to inject fluid into the at least one return line by means of a pneumatic arrangement.

The use of a pneumatic arrangement for accomplishing a flow rate of fluid into the return line, a more robust system can be obtained, which is less sensitive to conditions which have triggered the operational interruption of the geothermal heat mining system (e.g. power loss). Advantageously, the pressure retaining unit may be operated by a controller and/or control system powered by an uninterruptable power source such as a battery system.

Optionally, the fluid employed for injection is a liquid, wherein the pneumatic arrangement comprises at least one tank configured to receive the liquid up to a predetermined maximum level such that the tank is partially filled with gas, wherein the pressure of the gas is regulated in order to achieve flow of liquid towards the at least one return line.

The flow rate of liquid towards the return line can be controlled by controlling the gas pressure inside the tank. The gas pressure inside the tank can be controlled easily. The gas pressure in the tank may be kept within a predetermined range (e.g. substantially constant) resulting in a flow rate which is needed to maintain the pressure in the predetermined range. As a result, the flow rate can be automatically tuned to maintain a desired pressure in the return line, without requiring sensors indicating of the flow rate. For example, suppose the return line has a pressure of 99.9 bar and it is desired to keep the return line at a pressure of 100 bar. Then, the gas pressure inside the tank may be kept at 100 bar, which will result in a flow rate of liquid towards the return line in order to increase the pressure in the return line to 100 bar. So if the pressure in the return line drops, the flow will automatically be increased depending on the pressure difference. An easy and accurate control of the pressure in the return line is obtained in this way. The pressure may be regulated automatically resulting from the pressure difference between the gas pressure inside the tank and gas pressure in the return line. The liquid automatically flows to the return line due to the pressure difference, resulting in pressure equilibrium. It is much easier to control the pressure in the return line in this way. A flow control may not be needed to retaining pressure inside the return line.

Optionally, the return line is partially filled with gas at an upper side thereof, wherein during injection of liquid in the at least one return line, the pressure of gas inside the at least one tank is kept within a predefined range.

By regulating the pressure inside the tank, the pressure in the return line can be easily influenced. This provides significant advantages with respect to pressure control in the return line.

Optionally, during injection of transfer medium in the at least one return line, the pressure of gas inside the at least one tank is kept substantially constant.

In this way, a steep pressure drop in the return line can be effectively prevented, thereby reducing the risk of detrimental seismic activity.

Optionally, when the liquid in the tank is below a predetermined minimum level, injection of liquid into the at least one return line is halted, and the tank is filled again with transfer medium up to the predetermined maximum level.

In this way, pressure in the return line can be retained for a prolonged period of time.

Optionally, two tanks are employed, wherein a second tank is used for injection of transfer medium inside the at least one return line when a first tank is being refilled, and/or vice versa.

An advantageous cascading arrangement may be provided. When the first tank is filled with liquid up to the predetermined maximum level, a valve may be opened resulting in liquid to be pressed towards the return line. In this way, the liquid (e.g. transfer medium, brine, water, etc.) is effectively injected in the return line for retaining pressure in the return line. If the second tank is not completely filled with liquid up to the predetermined maximum level, filling can be performed whilst the first tank is used for retaining pressure in the return line.

In some examples, the liquid is transfer medium recovered from the installation of the geothermal heat mining system, e.g. from the energy recovery arrangement of the system. Optionally, during filling, the gas pressure inside the tank is controlled to be near the liquid pressure in the installation from where liquid is recovered. The tank can be gently filled with liquid by operating a valve. When the tank is filled, gas may be vented to the environment until the tank is filled with liquid up to the predetermined maximum level. When the tank is filled as desired (e.g. 90 percent filled), all valves may be closed and the tank may go into standby until the first tank is empty (e.g. a predetermined minimum level). Hence, when the first tank empties liquid towards the return line, the second tank may be filled, and vice versa.

Optionally, only one of the first and second tanks is used at a same time for providing pressure to the return line in case of an operational interruption of the geothermal heat mining system.

The two or more tanks of the pressure retaining unit may provide for a more continuous operation of said pressure retaining unit in case of an operational interruption of the geothermal heat mining system. It is also envisaged that a larger number of tanks are used for guaranteeing a more continuous control over the pressure in the return line in case of said operational interruption.

Optionally, the fluid injected in the at least one return line is transfer medium which is recovered from the energy recovery arrangement through a dedicated branch line, branched off from one or more transfer medium lines of the energy recovery arrangement.

Typically, in case of an operational interruption, the installation of the geothermal heat mining system still has transfer medium (e.g. brine) inside. The transfer medium may be still present in the tubing and subunits of the geothermal heat mining system. In some examples, the installation of the geothermal heat mining system has more than 30 m3 of transfer fluid inside. This transfer medium inside the installation can be employed as a reservoir from which the pressure retaining unit draws out fluid for injection in the return line for controlling the pressure in the return line. Only a portion of the transfer fluid still present in the installation is required for the pressure retaining unit to effectively retain pressure on the return line in case of operational interruption of the geothermal heat mining system. In some examples, during the operational interruption of the geothermal heat mining system, a first amount of transfer medium is dissipated per unit of time. Hence, only the first amount of transfer medium per unit of time is needed to keep the pressure constant in the return line. This may be highly dependent on the location of the geothermal heat mining system (i.e. characteristics of the earth surface, soil, earth layer thickness, etc.) and the characteristics of the return line of the geothermal heat mining system (e.g. dimensions, shape, path, thickness, length, etc.). In some examples, under natural pressure reduction due to the operational interruption, about 5 liters per hour are dissipated. In this example, only 5 liters per hour would be needed to keep the pressure constant in the return line.

Optionally, a water based liquid is used by the pressure retaining unit for retaining pressure on the return line. In some cases, the water based liquid has additives (such as biocides, oxyscavenger, etc.) for avoiding bacteria being reinjected.

It may be advantageous to use transfer medium, such as brine, extracted from the installation of the geothermal heat mining system for keeping pressure on the return line. By using transfer medium such as brine, it may not be needed to add additives, for example to avoid formation of H₂S and the risk to unwanted chemical reactions may be minimized.

Optionally, the fluid (e.g. transfer medium, brine, etc.) reinjected back into the return line by means of the pressure retaining unit is kept at a temperature within a predetermined temperature range. Optionally, the fluid is heated to a temperature falling within the predetermined temperature range prior to reinjection in the return line by means of the pressure retaining unit.

Advantageously, by controlling the temperature of the fluid which is injected in the return line by means of the pressure retaining unit, the risk of seismic activity may be further reduced. In some examples, the temperature is increased to a desired temperature in order to reduce the risk of temperature shocks. In some examples, the temperature is controlled to be in a predetermined range (e.g. +/- 10 degrees Celsius) around the temperature of the brine being conveyed towards the earth surface from the production line.

Optionally, the installation of the geothermal heat mining system is connected to one or more first power sources needed for operation, wherein the pressure retaining unit is connected to one or more second power sources which are different than the one or more first power sources. Optionally, the one or more second power sources includes at least one battery power source, for instance providing an uninterruptable power source, which can provide power even when the one or more first power sources fail. Hence, the pressure retaining unit may be independent of the electric power source(s) used by the installation of the geothermal heat mining system.

Optionally, the pressure retaining unit is configured to inject an amount of transfer medium per unit time into the return line, wherein the amount of injected transfer medium is at least 50 percent of an amount of transfer medium drained in the return line per unit time under natural conditions, more preferably at least 70 percent, even more preferably at least 80 percent. In this way, the pressure drop over time can be slowed down, resulting in a reduced risk of detrimental seismic activity.

In some examples, the amount of transfer medium injected by the retaining unit is approximately equal to the amount of transfer medium being drained per unit time under natural conditions. In this way, a pressure drop can be prevented, thus the risk of detrimental seismic activity can be significantly reduced. The amount of transfer medium drained per unit time under natural conditions, i.e. resulting from operational interruption of the geothermal heat mining system, may for example be smaller than 10 liters/hour, for example approximately 5 liters/hour. Hence, a relatively small flow rate, for instance smaller than 10 liters/hour or smaller than 5 liters/hour, may be required in order to effectively keep pressure on the return line in case of operational interruption.

According to an aspect, the invention provides for a system for operating a geothermal heat mining system, the heat mining system comprising a production line through which geothermal energy is conveyed towards the earth surface using a transfer medium, an energy recovery arrangement configured for recovering energy from the conveyed transfer medium by means of heat exchange, and a reinjection unit configured for pressing back, after heat exchange, the transfer medium into earth through at least one return line, wherein the system comprises a pressure retaining unit configured to provide pressure to the return line in case of an operational interruption of the geothermal heat mining system.

Without operation of the pressure retaining unit, the pressure in the return line would decrease and the gas volume would increase as a result of an operational interruption of the geothermal heat mining system. This is because the reinjection unit stops working and the transfer medium is drained into the ground. The pressure retaining unit may be configured to provide pressure to the return line in order to slow down the decrease of pressure in the return line.

In some examples, the operation of the pressure retaining unit may be independent of the operation of the geothermal heat mining system. Hence, if the operation of the geothermal heat mining system is interrupted, the pressure retaining unit can still operate in order to retain pressure on the return line. For example, the pressure retaining unit may be configured to continue operation, even during a power failure. This can be achieved for instance by employing a pneumatic or hydraulic actuation. The controller for operating the pressure retaining unit may require low power, hence a relatively small backup power source can be used, such as a battery pack. Typically, the period of time in which the pressure retaining unit is to provide additional pressure to the return line is limited, therefore not requiring a large backup power source. Additionally or alternatively, it is also possible to employ a backup power generator for operating the pressure retaining unit.

According to an aspect, the invention provides for a pressure retaining unit for use in a geothermal mining system, wherein the pressure retaining unit is configured to, in case of an operational interruption of the geothermal heat mining system, provide pressure to at least one return line of a geothermal mining system through which transfer medium is reinjected into the earth surface.

The pressure retaining unit may be configured to at least one of: maintaining a pressure in the return line substantially constant or keeping the pressure within a predetermined range, by injecting additional fluid into the return line or providing additional compensating pressure to the return line; or reducing the speed in which the pressure is dropped over time, i.e. compared to natural pressure drop resulting from the operational interruption of the geothermal mining system.

In case the geothermal mining system is temporally shut down, e.g. due to a scheduled interruption or an unscheduled interruption, the pace of the pressure reduction can be decreased by means of the pressure retaining unit. With other words, the pressure drops less quickly, and can be kept stable within a predetermined range and/or the pressure reduction gradient can be decreased.

Optionally, the pressure retaining unit is configured to maintain a stable pressure in the return line in case of operational interruption of the system. The stable pressure may be a pressure which is allowed to vary only within a predetermined range (limited variation), for example 5 % difference, for example 10 % difference, etc.

According to an aspect, the invention provides for a computer program product containing a set of instructions stored thereon that, when executed by a controller of the system according to the invention, results in the system performing an automated control method according to the invention.

Optionally, the pressure retaining unit is powered by means of an uninterruptable power supply. In some examples, the pressure retaining unit may be powered by means of a battery system. In some examples, the uninterruptable power supply is configured to power the controller of the pressure retaining unit, such that it can retain pressure on the return line in case of an operational interruption of the geothermal heat mining system, by means of a pneumatic (or hydraulic) actuation system. Such an actuation system may require significantly less power compared to an arrangement with one or more pumps. For example, in case of pneumatic arrangement, one or more pressure vessels for storage and containment of gases at above atmospheric pressure may be employed. The one or more pressure vessels may for instance be high-pressure gas cylinders or bottles. Inside the cylinder/bottles the stored contents may be in a state of compressed gas, vapor over liquid, supercritical fluid, or dissolved in a substrate material, depending on the physical characteristics of the contents. For example actuation energy may be provided using nitrogen gas cylinders.

According to an aspect, the invention provides for a geothermal heat mining system provided with a pressure retaining unit according to the invention.

In some examples, the geothermal mining system includes a production line (cf. production well), degasser, heat exchanger, gas injection unit, a filter unit and a transfer medium injection unit, and a return line (cf. reinjection well). The degasser may be configured for degassing of the transfer medium (e.g. brine) conveyed towards the earth surface. The gas injection unit may be configured to inject gasses separated from the transfer medium in the installation of the geothermal mining system back into the transfer medium which is to be reinjected back. The filter unit may be configured to capture small solid particles to prevent it from sticking or clogging in the installation of the geothermal mining system. The transfer medium injection unit may include one or more injection pumps which are configured to pump the transfer medium back into the surface. In some examples, two injection pumps are arranged for redundancy purposes, wherein during normal operation only one of the two pumps is in operation. It is also possible that both pumps are in operation, wherein failure of one of the two pumps, a single pump can provide sufficient pressure for injecting the transfer medium back into the earth surface.

Optionally, the system has a plurality of return lines. In some examples, the plurality of return lines are arranged adjacent to each other at the ground surface. In some examples, the pressure retaining unit may be configured to retain pressure on the plurality of return lines if an operational interruption occurs. In this way, prevention detrimental seismic activities induced by too sudden pressure drops can be better guaranteed.

In some examples, the geothermal process achieved by means of the geothermal mining system is a substantially neutral operation such that the transfer medium which is conveyed towards the earth surface is, after energy recovery (e.g. heat exchange or removal), injected back into the earth surface at sufficient depth (e.g. larger than 1 km). The depth of reinjection may depend on the properties of the earth surface, soil, earth layer thickness, etc. These properties may be highly specific to the geolocation of the geothermal mining system. Furthermore, the transfer medium may be brine which may have radioactive properties, which may necessitate the reinjection back into earth in order to prevent required expensive and/or intensive post treatment for i.a. radioactive decontamination.

According to an aspect, the invention provides for a system comprising a geothermal mining system and a pressure retaining unit according to the invention.

According to an aspect, the invention provides for a method and system for operating a geothermal heat mining system, the heat mining system comprising a production line through which geothermal energy is conveyed to the earth surface using a transfer medium, an energy recovery arrangement for recovering energy from the conveyed transfer medium by heat exchange, and a reinjection unit for pressing back, after heat exchange, the transfer medium into the earth surface through at least one return line, wherein a pressure maintaining unit is provided configured to provide pressure to the return line in case of an operational interruption of the geothermal heat mining system.

The pressure retaining unit can be configured to act once the operation of the reinjection unit is interrupted, for example due to a planned or unplanned operational stop of the geothermal heat mining system. In this way, the pressure retaining unit may act as a backup for controlling pressure in the return line, such as to prevent sudden pressure drops in the return line. The pressure retaining unit may allow pressure to be released more gradually, in order to effectively reduce the risk of seismic activity induced by the geothermal heat mining system.

The return line (cf. injection well) may be completely sealed. The return line may be configured to withstand high pressures which may be needed to effectively inject the transfer medium back into the ground. For example, the return line may operate at pressures higher than 30 bar, even higher than 50 bar, even in some examples higher than 100 bar.

It will be appreciated that the production line may be seen as a production well, supply hole, production hole, or the like of the geothermal mining system for extracting fluid from a geothermal zone in an inner part of the earth, and that the return line may be seen as a reinjection well, reinjection hole, return hole, or the like of the geothermal mining system for returning fluid towards the geothermal zone. The production line and the return line may have various configurations. It is also possible that multiple production lines and/or multiple return lines are arranged.

It will be appreciated that heat/energy may be recovered from the conveyed transfer medium in various ways. When the transfer medium reaches the installation of the geothermal mining system, e.g. at the earth surface, the pressure may be dropped, which may cause for example water to turn into steam. The hot transfer medium (e.g. steam) can be used to directly or indirectly spin a turbine, which can be connected to a generator that produces electricity. As a result, the transfer medium will cool off, and the process of reinjecting the transfer medium back into the earth may be commenced. Reinjection may be performed using one or more pumps. However the energy contained in the hot transfer medium may be used in many different ways.

It will be appreciated that brine as transfer medium can be seen as a high-concentration solution, e.g. of salt in water. The brine may be a mixture of liquid and gasses. In some examples, brine may include concentrated solution of Na+ and Cl- ions. Brine may also include other ions, such as for example K+, Mg2+, Ca2+, and Sr2+, Br-, I-, SO42-. The brine may include various other elements and ions.

It will be appreciated that with regard to operational interruption, a distinction may be made between a planned shutdown of the geothermal heat mining system and an unplanned shutdown of the geothermal heat mining system. The unplanned shutdown may for instance be a result of a sudden breakdown of one or more components in the installation of the geothermal heat mining system (e.g. reinjection pump for reinjecting the transfer medium back into the surface), a power cut, etc.

It will be appreciated that orders of processes or steps described herein may be changed and are not limited to the manner described herein. The terms "first", "second", and the like, as used herein do not denote any order, quantity, or importance, but rather are used to distinguish one element from another.

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1%, and in another embodiment within 0.5%. The term "coupled" as used herein is defined as connected, although not necessarily directly and not necessarily mechanically.

It will be appreciated that any of the aspects, features and options described in view of the method apply equally to the system and the described pressure retaining unit and geothermal heat mining system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a system;
Fig. 2 shows a schematic diagram of a pressure retaining unit;
Fig. 3 shows a schematic diagram of a pressure retaining unit;
Fig. 4 shows a schematic diagram of a pressure retaining unit;
Fig. 5 shows a schematic diagram of a pressure retaining unit;
Fig. 6 shows a schematic diagram of a return line;
Fig. 7 shows a schematic diagram of a pneumatic arrangement;
Figs. 8a and 8b show a schematic diagram of a graph; and
Fig. 9 shows a schematic diagram of a method.

### DETAILED DESCRIPTION

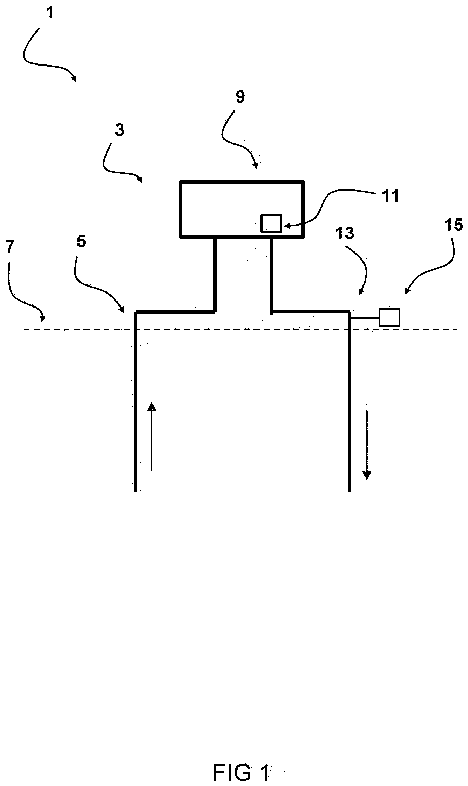

Fig. 1 shows a schematic diagram of an exemplary system 1. The system 1 has a geothermal heat mining system 3, the heat mining system 3 comprising a production line 5 through which geothermal energy is conveyed towards the earth surface 7 using a transfer medium, an energy recovery arrangement 9 for recovering energy from the conveyed transfer medium by heat/energy exchange, and a reinjection unit 11 for injecting back, after heat/energy exchange, the transfer medium into earth through at least one return line 13, wherein a pressure retaining unit 15 is provided configured to provide pressure on the return line 13 in case of an operational interruption of the geothermal heat mining system. The pressure retaining 15 may keep/retain induced pressure on the return line 13, in order to prevent steep pressure drops.

The pressure retaining unit 15 may be a subunit of the geothermal heat mining system 3 which is only activated to retain the pressure on the return line 13 in case of an operational interruption. It may thus be a separate subunit on which the geothermal heat mining system 3 does not rely during normal operation of energy recovery. Hence, in case of operational interruption of the geothermal heat mining system 3, the pressure retaining unit 15 may continue operation and activate in order to provide pressure to the return line 13. The pressure retaining unit 15 may act as a backup arrangement configured to effectively modulate or slow down the pressure drop in a controlled fashion, thereby effectively reducing the risk of induced seismic activities.

The geothermal heat mining system 3 may be a geothermal power plant with suitable subsystems and/or an geothermal installation or loop for performing energy recovery. The geothermal heat mining system 3 may have various types of energy recovery arrangements 9. In some examples, the energy recovery arrangement 9 comprises one or more heat exchangers with peripheral equipment, e.g. filters, degassing units, cooling/heating units, hydraulic/pneumatic networks, etc.

The operational interruption of the geothermal heat mining system 3 may be induced by a power cut (e.g. power source failure), a scheduled maintenance of one or more components in the geothermal heat mining system 3, an upgrade of one or more components in the installation of the geothermal heat mining system, repair or replacement of one or more components in the geothermal heat mining system 3, unexpected failure of one or more (critical) components in the geothermal heat mining system 3, etc. The operational interruptions may occur due to various reasons. The pressure retaining unit 15 can effectively prevent that the fluid pressure in the return line 13 decreases uncontrollably. It will be appreciated that some maintenance activities can be performed while the operation of the geothermal heat mining system continues, thus not requiring an operational interruption. In such case, the pressure retaining unit 15 will remain in standby modus.

The two wells, cf. the production line 5 and the return line 13, at the ground surface may be distanced from each, for example 10 meters apart. Below the surface, a larger distance may be achieved by directional drilling, for example more than 1 km apart (directional drilled). Various configurations are possible.

A controller may be provided for operating the pressure retaining unit 15. The controller may be configured to operate even under operational interruption of the geothermal heat mining system 3.

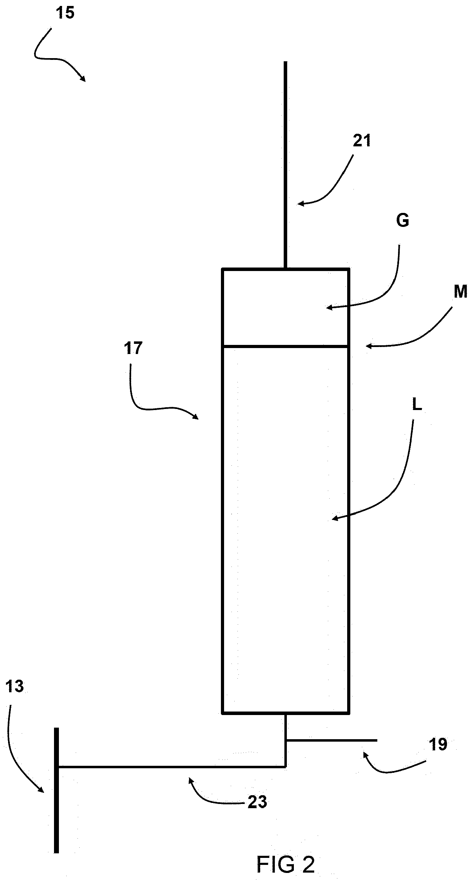

Fig. 2 shows a schematic diagram of an exemplary pressure retaining unit 15. The pressure retaining unit 15 may be configured to allow pressure reduction in the return line 13 in a controlled manner. The pressure decrease may be slowed down by the pressure retaining unit 15. Advantageously, the pressure retaining unit 15 may result in a more gradual pressure drop over time resulting from the operational interruption of the geothermal mining system 3.

In this example, the pressure retaining unit 15 employs a pneumatic actuation for transferring fluid to the return line for providing pressure on the return line. The pneumatic actuation utilizes gas under pressure, for instance provided by means of a pressure vessel or reservoir, for injecting liquid into the return line 13. Advantageously, no electrical energy may be required to provide for actuation for transferring fluid to the return line for retaining/providing pressure on/in the return line. In some examples, the pressure vessel is gas cylinders for providing pressurized nitrogen gas. Only electrical power may be required for powering the controller which is configured to operate the pressure retaining unit 15.

By employing pressurized gas, such as for instance nitrogen gas, in order to transfer fluid to the return line 13 such as to retain pressure on the return line 13 in case of operational interruption, a more robust system can be achieved. Hence, detrimental induced seismic activity can be better prevented by the pressure retaining unit 15.

In this example the pressure retaining unit 15 comprises a tank 17 configured to receive liquid L up to a predetermined maximum level M via a liquid inlet 19, such that the tank is partially filled with gas G. The tank 17 also comprises a gas inlet 21 for providing gas into the tank 17. The pressure of the gas G is regulated in order to achieve flow of liquid towards the at least one return line 13 via a liquid output 23, in case of operational interruption of the geothermal heat mining system 3.

The power retaining unit 15 may be powered by a dedicated power supply. In this example the pressure retaining unit comprises a pneumatic actuation arrangement for inducing a flow of fluid towards the return line 13 upon operational interruption of the geothermal mining system 3, wherein one or more valves and a controller are powered electrically. It is also possible to power some sensors providing measurement values needed for operation of the pressure retaining unit 15. These components may be powered electrically by means of a backup power source, such as a battery system. Typically, low voltage is required for powering said components of the pressure retaining unit. The actuation, which requires most energy, is achieved pneumatically, for instance using vessels or containers arranged to provide pressurized/compressed gas (e.g. nitrogen gas). The battery system may be configured to provide sufficient power for operating the pressure retaining unit. A relatively small battery system may be sufficient for providing power to the pressure retaining unit, since no electrical power is used for actual transfer of fluid (e.g. transfer fluid) to the return line, which is the case if an electrical pump is employed.

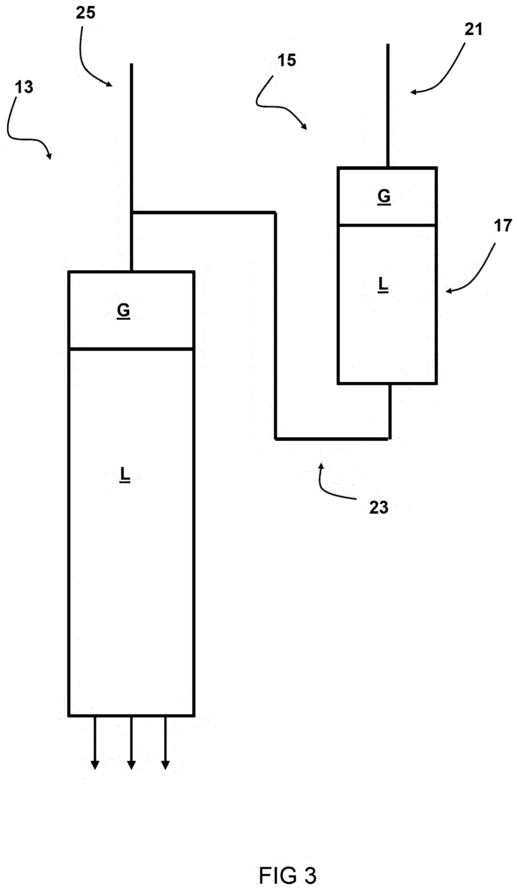

Fig. 3 shows a schematic diagram of an exemplary pressure retaining unit 15 in fluid communication with the return line 13. The pressure retaining/maintenance unit 15 may be configured to ensure a more slow pressure drop over time resulting from the operational interruption of the geothermal heat mining system 3.

Without operational interruption of the geothermal heat mining system 3, the return line receives transfer medium under pressure from reinjection input 25. The return line 13 is also partially filled with gas G at an upper side thereof, wherein during injection of liquid L in the at least one return line from the tank 17 of the pressure retaining unit 15, the pressure of gas G inside the tank 17 is controlled, for instance kept within a predefined range.

Instead of the electrical actuation for transferring fluid under pressure, a pneumatic device is thus utilized. In the event of a power failure, etc., the entire operation of the pressure retaining unit 15 can be kept up and running by means of a simple battery backup providing power to the controller and optionally to one or more electrically operated components such as valves.

Although such an embodiment provides significant advantages, it will be appreciated that a conventional pump (not shown) may also be used for injecting fluid into the at least one return line when an operational interruption of the geothermal heat mining system 3 occurs.

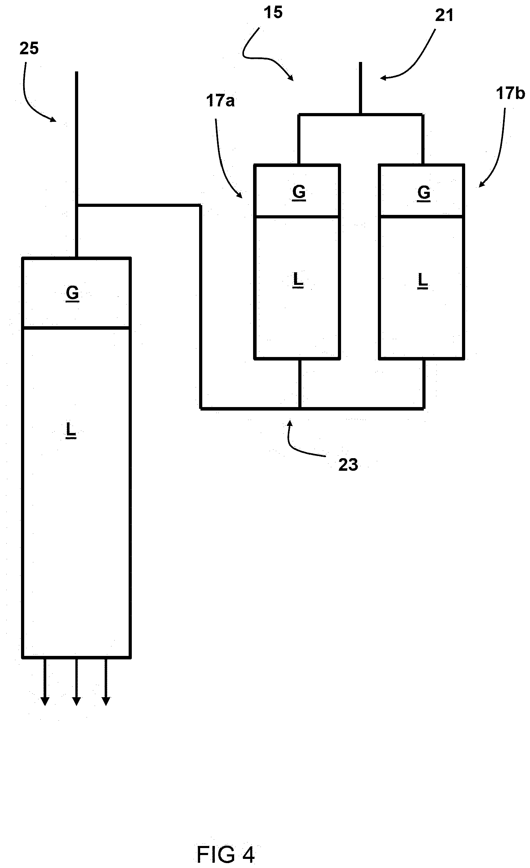

Fig. 4 shows a schematic diagram of a pressure retaining unit 15 with two tanks 17a, 17b. In this example, the two tanks, namely a first tank 17a and a second tank 17b, provide for a cascade mechanism. The first and second tanks 17a, 17b are arranged and operated such as to provide for a more continuous operation. The second tank 17b may take over when the first tank 17a is empty, and/or vice versa. When the first tank 17a is filled with liquid L up to a predetermined level M, one or more valves (not shown) may be operated to allow liquid L to flow towards the return line 13. At this point, the gas pressure inside the first tank 17a can be controlled in order to influence the pressure in the return line 13. This allows for easy control, as it is more easy to pneumatically control the pressure in the tanks 17a, 17b than directly control the pressure in the return line 13. The pressure in the first tank may for example be kept substantially constant or within a predetermined range, preventing too sudden pressure drops in the return line which could potentially induce adverse seismic activity. Excess gas may be vented to the environment. The second tank operates similarly, but is controlled such that when the first tank is refilled, the second tank is used, and/or vice versa. Such cascading functionality provides important benefits with regard to continuous operation of the pressure retaining unit.

When the tank is filled with liquid L up to the predetermined maximum level M, the tank is stilled partially filled with gas G. The pressure of this gas G inside the tank is carefully controlled in order to provide/retain pressure to/in the return line upon operational interruption of the geothermal heat mining system 3.

Initially, when the tank is empty, gas is provided such that the gas pressure is approximate the pressure of the liquid used to fill the tank. The liquid may for example be transfer medium, brine or water. This may be done by operating a valve to open, which can increase the gas pressure in the tank. In some examples, the pressure may be kept substantially constant over the entire filling period. By keeping the pressure constant, it is possible to gently fill the tank. In this way, the gas inside the tank can be used as a cushion, preventing violent flow of liquid or splashing effects (e.g. liquid at 50 bar). Otherwise the liquid may enter the tank too violently, which may cause for liquid entering the pneumatic arrangement. An optional venting unit is provided such that when the tank is being filled, it is prevented that the gas cushion is compressed resulting in increased pressure, which would reduce the flow of liquid and which may eventually result in stopping of the filling process.

It will be appreciated that liquid may be recovered from various part of the installation (e.g. geothermal loop) of the geothermal heat mining system. It is also possible to partly recover liquid (e.g. brine) from the installation, and partly provide liquid from another source. Various sources may be provided from which fluid is recovered for injection inside the return line by means of the pressure retaining unit. In some examples, brine is recovered from a line downstream a filter arrangement in the geothermal loop. However, it will be appreciated that brine can be recovered from various locations of the geothermal loop or installation.

During operation of the pressure retaining unit 15, the gas pressure inside the tank (with opened valve between the gas tank 17a, 17b and the return line 13) and the gas pressure of gas inside the return line 13 can remain the same (ideal gas law), providing a significantly enhanced control over the pressure in the return line 13. It can be more difficult to directly control the liquid pressure in the return line 13. The liquid pressure in the return line depends on the depth of measurement. Advantageously, the pressure retaining unit 15 may be configured to control the pressure of the gas inside the return line 13. It may be assumed that the pressure of the gas in the return line is equal to the pressure pushing down the liquid inside the return line 13.

Liquid L may be injected in the return line 13 in order to impact and thereby regulate the gas pressure in the return line 13. In this way, for instance the gas pressure in the return line 13 can be kept within a predetermined desired range, e.g. substantially constant. During natural draining in the return line, for instance resulting from the operational interruption of the system, the pressure reduction may depend on the natural draining rate in the return line (e.g. about 5 liters per hour). Hence, in order to keep the pressure in the return line substantially constant, a flow rate of liquid injected in the return line has to correspond to the natural draining rate (e.g. about 5 liters per hour).

Although two tanks 17a, 17b are shown for providing a cascading mechanism and redundancy, it will be appreciated that arranging a single tank 17 is also possible. Furthermore, it is possible to provide for more than two tanks, such as three tanks or four tanks.

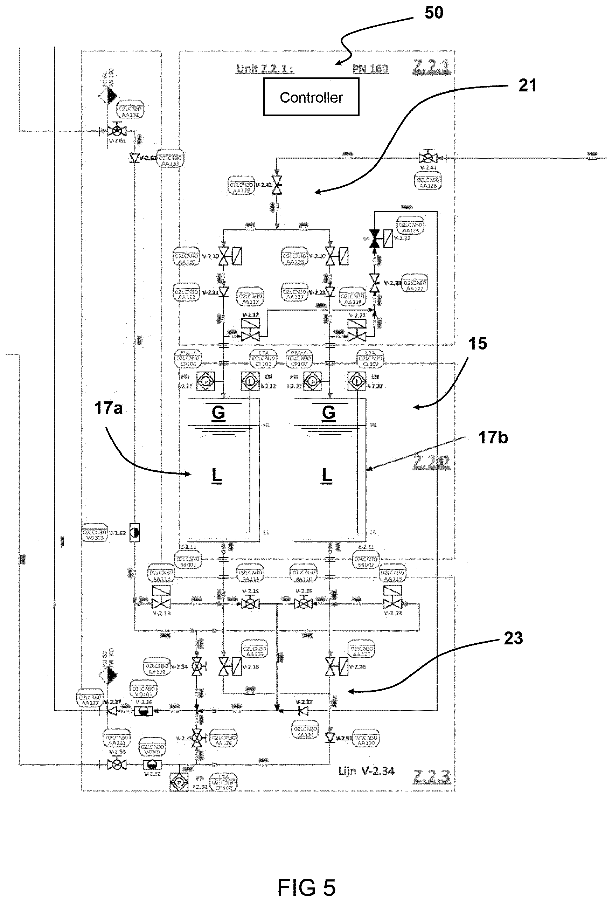

Fig. 5 shows a schematic diagram of an exemplary pressure retaining unit 15 with optional peripheral components. In this example, similar to the embodiment shown in fig. 4, the pressure retaining unit 15 comprises two tanks 17a, 17b for improving continuity. The pressure retaining unit 15 includes a controller 30 which is preferably powered by an uninterruptable power source, such that the controller 30 can remain operating even during intended or unintended operational interruption or failure of the geothermal heat mining system 3.

The pressure retaining unit 15 may be configured to control the pressure release resulting from the operational interruption of the system. In some examples, the pressure retaining unit 15 is configured to at least during a preset time period let the pressure decrease more slowly, thereby preventing sudden pressure drops which can induce detrimental seismic activity. In some examples, the pressure retaining unit 15 can be configured to at least during a preset time period keep the pressure in the return line within a predetermined range or even constant.

Pressurized gas can be effectively used for actuation. Such embodiments of the invention provide for a number of advantages, but it is also envisaged that transfer fluid is injected directly into the return line by means of the pressure retaining unit, for example using a pump which can be powered for instance by a battery power supply and/or a power generation arrangement.

Optionally, one-way relief valves V 2.51. V. 2.35 are arranged. For example, when maintenance and pressure has to be released, the pressure can be reduced using these relief valves.

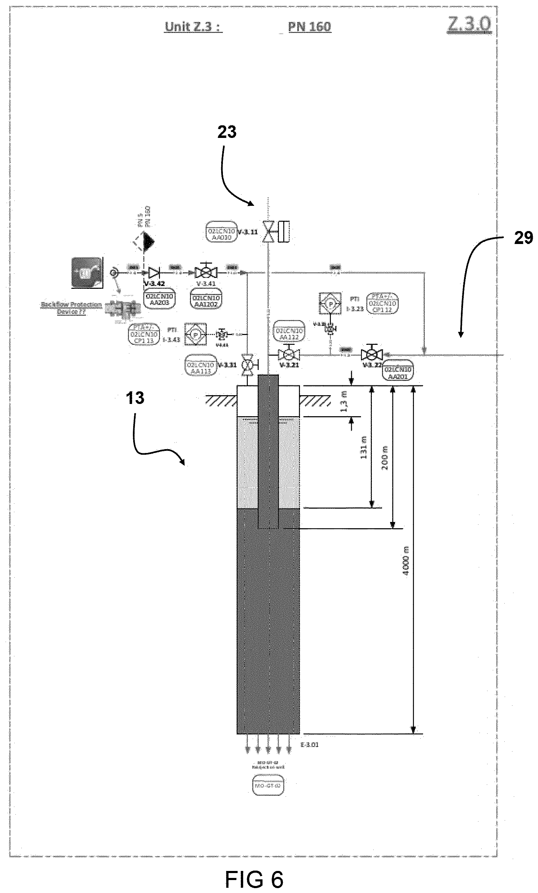

Fig. 6 shows a schematic diagram of an exemplary return line 13 with optional peripheral components. The geothermal heat mining system 3 may have at least two wells, namely a production well (cf. production line), and a reinjection well or return line 13 as shown in this figure. Transfer medium, such as brine, may be pumped up from the production well. The transfer medium conveyed towards the earth surface may have a relatively high temperature, allowing energy recovery by means of heat exchange in the installation of the geothermal heat mining system 3. The recovered energy/heat may be used for various purposes, such as electricity generation (e.g. organic Rankine cycle), heating buildings, industrial processes, energy storage, etc. For example, generation electricity may be used locally and/or provided to a grid.

The pressure retaining unit 15 may be in fluid communication with the return line 13 via a fluid communication line 29. In some examples, the pressure retaining unit 15 has a pneumatic actuation utilizing at least one tank 17 for regulating the pressure inside the return line 13 by regulating gas pressure in the at least one tank 17. For example, the pressure retaining unit 15 may be configured to at least temporary provide additional pressure to the return line 13 via the at least one tank 17. In some example, the pressure on the return line is substantially maintained within a predetermined level, for example substantially constant, by keeping the gas pressure in the at least one tank within a predetermined level or even substantially constant. It will be appreciated that it is also envisaged that the pressure retaining unit includes a hydraulic pump (not shown) for providing additional pressure to the return line 13. Various types of hydraulic pumps can be used, preferably low power pumps.

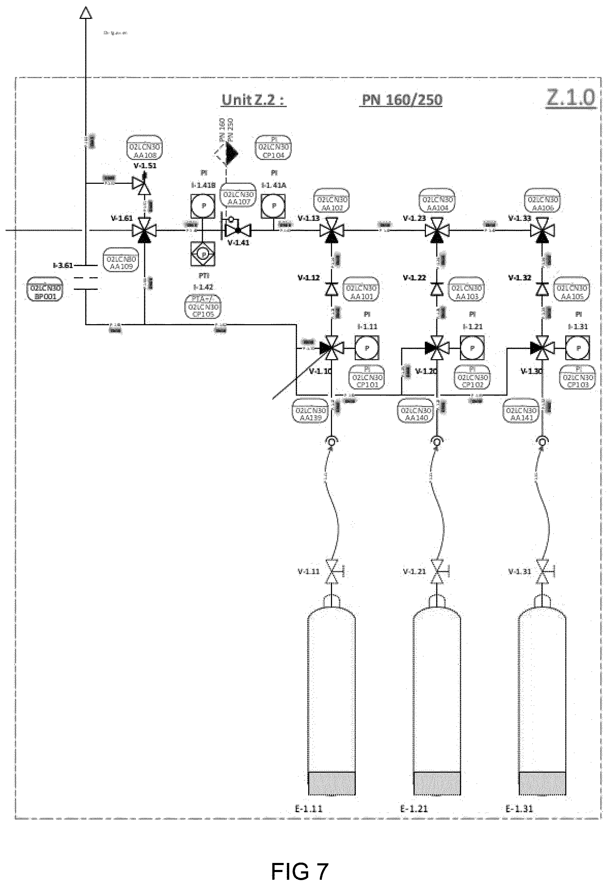

Fig. 7 shows a schematic diagram of an exemplary pneumatic arrangement with optional peripheral components. The pressure retaining unit 15 may have a pneumatic arrangement using pressurized gas. It is also possible that the pressure retaining unit 15 is in fluid communication with such a pneumatic arrangement. In this example, pressurized nitrogen gas is provided by three gas cylinders. Each gas cylinder has an optional pressure control. The gas cylinders may for instance be initially at approximately 200 bar. Further, an optional pressure regulation (PI) is employed in order to prevent the full gas pressure being applied for actuation. Although three gas cylinders are shown in this example, it is appreciated that a different number of gas cylinders may be used (e.g. 1, 2, 4, 5, etc.).

In some examples, a first and a second gas cylinder E-1.11, E-1.21 are used concurrently, wherein valves V.1.13, V.1.23 of respectively the first and second gas cylinder E-1.11, E-1.21 are opened, and wherein the third gas cylinder is provided as backup. In this way, the gas cylinders can be easily replaced whilst providing continuous operation of the pressure retaining unit. For example, suppose that the first and second gas cylinders E-1.11, E-1.21 are (almost) empty, then the valves V 1.13 of the third gas cylinder E-1.31 can be opened and the valves V 1.13, V1.23 of the first and second gas cylinders can be closed such that the gas cylinders E-1.11 E-1.21 can be replaced and/or refilled. Hence, replacement of gas cylinders can be achieved without needing to interrupt the operation of the pressure retaining unit, resulting in a more continuous system whilst providing improved redundancy.

An optional venting device may be provided, which can allow draining for instance when the tanks are to be replaced. Furthermore, the venting device may also provide an overpressure protection by releasing gas. The pneumatic arrangement is configured such that gas actuation can be controlled and possibly turned off by appropriately controlling valves.

Below a detailed description of an exemplary working of various subcomponents shown in figures 5-7 is provided. However, it will be appreciated that exemplary embodiments shown in figures 5-7 can be operated in other ways which fall within the scope of the appended claims, and this description is to be regarded in an illustrative sense rather than in a restrictive sense.

When the geothermal mining system has stopped operating, the ESP production pump may be shut down and the shut-off valves 02LCN20-AA008 / 02LCN20-AA010 may be closed. The pressure retaining unit is configured to keep the return line (i.e. reinjection well) under pressure in order to avoid possible detrimental seismic activity or induced earthquakes. For keeping the reinjection well under pressure, the pressure retaining unit according to this example comprises a nitrogen gas system, two dosing tanks 02LCN30-BB001 / 02LCN30-BB002. The nitrogen gas system is equipped with a pressure transmitter 02LCN30-CP105 for measuring the pressure on the nitrogen bottles. In this example, the pressure of nitrogen for filling the dosing tanks needs to be at least 115 bar. However, other pressures are also possible.

Both dosing tanks are equipped with: an inlet valve for nitrogen 02LCN30-AA110 / 02LCN30-AA116, an inlet valve for brine recovered from the geothermal loop 02LCN30-AA113 / 02LCN30-AA119, an outlet valve for brine too reinjection well 02LCN30-AA115 / 02LCN30-AA121, an outlet valve for pressure in dosing tank 02LCN30-AA112 / 02LCN30-AA118, a level transmitter 02LCN30-CL101 / 02LCN30-CL102, and a pressure transmitter 02LCN30-CP106 / 02LC30-CP107.

The pressure retaining unit on the geothermal loop may be a semi-automatic subsystem with a number of hand valves (with no feedback) that needs to be in the correct position to get a working system. However, it is also envisaged to use automatic valves, which are controlled by a controller.

For the pressure control to the reinjection well, the pressure retaining unit may have two options. A first option may be to provide fixed pressure on injection well. The setpoint can be the last pressure measurement 02LCN10-CP112 on the reinjection well when the geothermal loop has stopped working. The second option may be decreasing pressure over time on injection well. The setpoint may be the last pressure measurement 02LCN10-CP112 on the reinjection well when the geothermal loop has stopped working and will be decreased with a setpoint of x bar after each setpoint x time. The pressure retaining unit of this example may have three working modes: only using the first dosing tank 02LCN30-BB001, only using the second dosing tank 02LNC30-BB002, switching between dosing tank 02LCN30-BB001 and 02LCN30-BB002.

In the first mode, only the first dosing tank 02LCN30-BB001 is used for keeping the reinjection well under pressure. The automatic filling and transfer from dosing tank 02LCN30-BB001, starting from rest condition for this mode may involve starting filling the dosing tank with brine, wherein valves 02LCN30-AA112 and 02LCN30-AA113 are open and the dosing tank is filled up with brine until the level transmitter 02LCN30-CL101 indicates a predetermined maximum level. A setpoint 02LCN30-CL101 H / 02LCN30-CL101 HH may need to be determined due start up. In a next step, filling of the dosing tank with brine may be stopped, wherein the valves 02LCN30-AA112 and 02LCN30-AA113 are closed. In a next step, filling with nitrogen may be started, wherein valve 02LCN30-AA110 is opened for filling up the dosing tank with nitrogen until the pressure in dosing tank 02LCN30-CP106 is equal to the setpoint. In a next step, filling with nitrogen is stopped, wherein valve 02LCN30-AA110 is closed. In a next step, brine may be transferred to the reinjection well, wherein valve 02LCN30-AA115 is opened and brine under pressure flows to the reinjection well. The dosing tank may stay in this step until the level transmitter 02LC30-CL101 will give a low or low alarm. During transferring brine to the reinjection well, the pressure in the dosing tank will reduce as the level of brine will reduce. If the pressure in the dosing tank becomes below the pressure setpoint, the pressure needs to be increased. Therefore, nitrogen may be put back in the dosing tank by opening valve 02LCN30-AA110 until the pressure is back higher than the pressure in the reinjection well. Setpoint 02LCN30-CL101 H / 02LCN30-CL101 HH may need to be determined due start up alarm. In a next step, transfer of brine to the reinjection well may be stopped. When the dosing tank level transmitter gives a low or low alarm, transfer of brine may be stopped in order to avoid that nitrogen will go into the reinjection well, wherein valve 02LCN30-AA115 may be closed. In a next step, refilling of the dosing tank with brine can be restarted (cf. back to first step). The pressure retaining unit may repeatedly perform the steps, until the operation of the pressure retaining unit is interrupted, for instance by an operator, after a predetermined period of time and/or after a predetermined number repeated cycles.

Optionally, after stopping the pressure retaining unit, the dosing tank(s) may be drained, and optionally rinsed with water before starting up the geothermal loop.

In the second mode, only dosing tank 02LCN30-BB002 is used for keeping the reinjection well under pressure. The automatic filling and transfer from dosing tank 02LCN30-BB002, starting from rest condition for this mode may involve start filling dosing tank with brine, wherein valves 02LCN30-AA118 and 02LCN30-AA119 are opened and the dosing tank is filled up with brine until the level transmitter 02LCN30-CL102 indicates a predetermined maximum level. The setpoint 02LCN30-CL102 H / 02LCN30-CL102 HH may need to be determined due start up. In a next step, filling of the dosing tank with brine may be stopped, wherein valves 02LCN30-AA118 and 02LCN30-AA119 are closed. In a next step, nitrogen filling may be started, wherein valve 02LCN30-AA116 is opened and the dosing tank is filled up with nitrogen until the pressure in dosing tank 02LCN30-CP107 is equal to the setpoint. In a next step, filling with nitrogen may be stopped, wherein valve 02LCN30-AA116 is closed. In a next step, brine may be transferred to the reinjection well, wherein valve 02LCN30-AA121 is opened and brine under pressure flow to the reinjection well. Next, the dosing tank may stay in this step until the level transmitter 02LC30-CL102 will give a low or low alarm. During transferring brine to the reinjection well, the pressure in the dosing tank may be reduced as the level of brine reduces. If the pressure in the dosing tank comes below the pressure of the reinjection well, the pressure may need to be increased. Therefore, nitrogen may be put in the dosing tank by opening valve 02LCN30-AA116 until the pressure is again equal to the setpoint. Setpoint 02LCN30-CL102 H / 02LCN30-CL102 HH may need to be determined due start up alarm. In a next step, transfer of brine to the reinjection well may be stopped. When the dosing tank level transmitter gives a low or low alarm, transfer of brine may be stopped to avoid that nitrogen will go into the reinjection well, wherein valve 02LCN30-AA121 is closed. In a next step, filling of the dosing tank with brine may be restarted (i.e. back to step 1). The pressure retaining unit may repeatedly perform the successive steps until a stop condition is met (e.g. operator action, number of cycles, period of time, etc.).

In the third mode, switching between dosing tank 02LCN30-BB001 and 02LCN30-BB002 may be carried out, wherein both dosing tanks are used for keeping the reinjection well under pressure. One dosing tank may transfer brine under pressure to the reinjection well, and the other dosing tank may fill up with brine and stand by when the first dosing tank gets empty. The automatic cascade filling and transfer from dosing tank 02LCN10-BB001 and 02LCN10-BB002, starting from rest condition may involve start filling dosing tank 02LC30-BB001 with brine, wherein at start-up first the dosing tank 02LCN30-BB001 is filled up with brine by opening valves 02LCN30-AA112 and 02LCN30-AA113. Brine from the geothermal loop will fill up the dosing tank until the level transmitter 02LCN30-CL101 gives a high or high high alarm. Setpoint 02LCN30-CL101 H / 02LCN30-CL10 HH may need to be determined due start up. In a next step, filling of dosing tank 02LC30-BB001 may be stopped, wherein valve 02LCN30-AA113 is closed and valve 02LCN30-AAA112 remain open for the next step. In a next step, recovering nitrogen may be started. When switch over between the two dosing tanks, one dosing tank may be filled up with nitrogen while the other dosing tank is still empty. For switch from dosing tank 02LCN30-BB001 to dosing tank 02LCN30-BB002, the normal open valve 02LCN30-AA123 can be closed such as to not losing any nitrogen. If valve 02LCN30-AA123 is closed, dosing tank 02LCN30-BB002 can be opened using valve 02LCN30-AA118. As a result, nitrogen will flow from the first dosing tank to the other dosing tank. In a next step, recovering nitrogen may be stopped. Nitrogen may be recovered until the pressure 02LCN30-CP106 in dosing tank 02CLN30-BB001 is equal to the pressure 02LCN30-CP107 in dosing tank 02LCN30-BB002. At this moment both valves 02LCN30-AA112 and 02LCN30-AA118 are closed. When both valves are closed, valve 02LCN30-AA123 is opened. In a next step, filling of nitrogen is started. After valve 02LCN30-AA123 is open, valve 02LCN30-AA110 will open and fill up the dosing tank 02LCN30-BB001 with nitrogen until the pressure in dosing tank 02LCN30-CP106 is greater than the pressure of the reinjection well 02LCN30-CP108. In a next step, filling of nitrogen is stopped. If pressure 02LCN30-CP106 is greater the 02LCN30-CP108, valve 02LCN30-AA110 is closed. In a next step, brine is transferred to reinjection well and dosing tank 02LCN30-BB002 is filled up. Valve 02LCN30-AA115 is opened and brine under pressure can flow to the reinjection well from dosing tank 02LCN30-BB001. The dosing tank 02LCN30-BB001 may stay in this step until the level transmitter 02LC30-CL101 gives a low or low alarm. During transferring brine to the reinjection well, the pressure in the dosing tank reduces as the level of brine will reduce. If the pressure in the dosing tank becomes below the pressure of the reinjection well, the pressure needs to be increased. Therefore nitrogen is put back in the dosing tank by opening valve 02LCN30-AA110 until the pressure is back higher than the pressure in the reinjection well. At the same time dosing tank 02LCN30-BB002 will start-up filling with brine as described in the first step. Dosing tank 02LCN30-BB002 will follow the same successive steps but with its respective valves. When the second dosing tank 02LCN30-BB002 is filled up with brine under pressure, this tank is in standby for when the first dosing tank 02LCN30-BB001 becomes empty. In a next step, transfer of brine to the reinjection well is stopped, and there is a switch to the other dosing tank. When the active dosing tank level transmitter gives a low or low alarm, transfer of brine is stopped to avoid that nitrogen will go into the reinjection well. Valve 02LCN30-AA115 may be closed. When valve 02LCN30-AA115 is closed, valve 02LCN30-AA121 may be opened, and brine under pressure will flow from the other dosing tank to the reinjection well. In a next step, filling first dosing tank and transfer brine from second dosing tank is restarted. The refill of dosing tank 02LCN30-BB001 will start again from the first step. The dosing tank 02LCN30-BB001 may be ready for use when dosing tank 02LCN30-BB002 becomes empty. The pressure retaining unit may be configured to repeat all steps until a stop condition is fulfilled (e.g. operator action).

Optionally, after the pressure retaining unit has been stopped, the at least one tank may be drained. Advantageously, damage may be prevented, since the brine inside the dosing tanks may cause damage the tank over time. After both dosing tanks are drained, the next step is flushing both dosing tanks.

In an exemplary mode, the dosing tanks 02LCN30-BB001 / 02LCN30-BB002 are drained semi-automatically. Draining the dosing tanks can be performed with a semi-automatic flow.

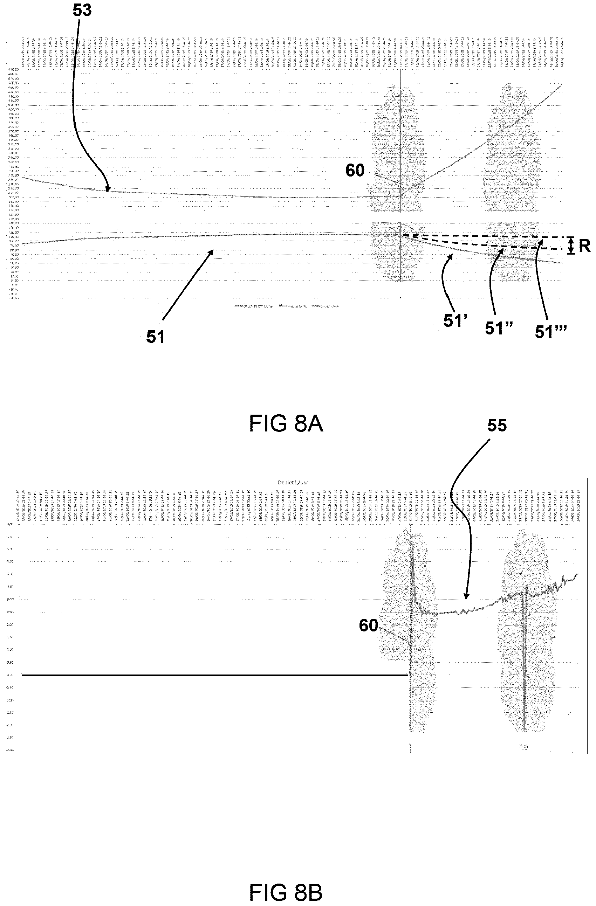

Figs. 8a and 8b show a schematic diagram of a graph. In figs. 8a, 8b, the horizontal axis is a measure of time. In fig. 8a, line 51 is the pressure in the return line (cf. reinjection well). Line 53 is a volume of gas inside the return line. As the pressure drops due to an operational interruption of the geothermal heat mining system 3, which is indicated by line 60, the volume of gas increases (since the amount of gas remains the same).

After the operational interruption, a pressure drop occurs in the return line if the pressure retaining unit is not employed. This is illustrated by line 51'. This pressure drop which occurs due to natural draining of liquid in the return line may result in detrimental seismic activity. The pressure retaining unit 15 may be configured to at least partially compensate for the pressure drop by providing pressure to the return line. In some examples, the pressure retaining unit is adapted to maintain the pressure within a predetermined ranged R, see e.g. line 51". In some examples, the pressure retaining unit is configured to keep the pressure substantially constant, as illustrated by line 51"'.

Fig. 8b shows line 55 corresponding to the flow rate from the pressure retaining unit 15 to the return line 13 for compensating for the pressure drop as illustrated by line 51'.

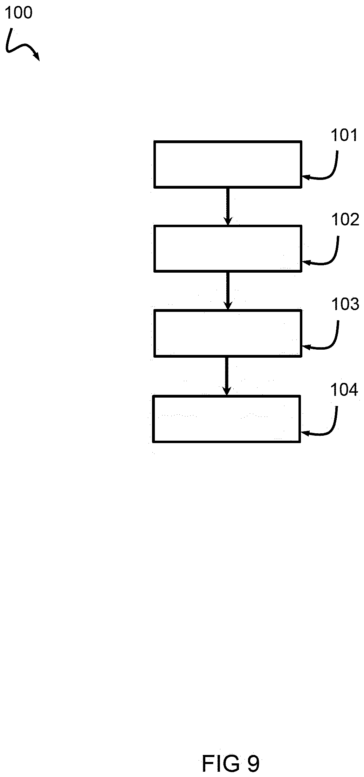

Fig. 9 shows a schematic diagram of a method 100 of operating a geothermal heat mining system. In a first step 101, geothermal energy can be conveyed towards the earth surface through a production line using a transfer medium. In a second step 102, energy can be recovered from the conveyed transfer medium by heat exchange by means of an energy recovery arrangement. This can be performed by means of heat/energy exchange. In a third step 103, the transfer medium can be injected back into earth through at least one return line 13 different than the production line 5. In a fourth step 104, a pressure retaining unit is provided configured to provide pressure to the return line and/or retain pressure on the return line, in case of an operational interruption of the geothermal heat mining system. This may involve monitoring the operational status of the geothermal heat mining system, wherein upon detection of an operational interruption (e.g. due failure, power cut, maintenance, etc.), the pressure retaining unit is activated in order to apply pressure to the return line and/or to maintain/retain pressure on the return line.

The system and method according to the invention enables increasing the predictability of induced seismic activity, allowing to prevent detrimental seismic activity. Earthquakes and detrimental seismicity can be prevented in a cost-effective and reliable way. Furthermore, the efficiency of the geothermal heat mining system can be enhanced, since operational interruptions as a result of induced seismicity may not be required.

Optionally, the pressure retaining unit is configured such that actuation for inducing a flow of liquid to the return line for retaining pressure on, or providing pressure to, the return line is performed independent of electric power. For example, employing a pump may require a backup generator, making the pressure retaining unit less robust. In some advantageous embodiments, this actuation is performed pneumatically. The induced flow rate towards the return line may be achieved by means of pressurized gas. Other actuation mechanisms, such as hydraulic actuation, may also be employed.

Optionally, the controller of the pressure retaining unit is continuously powered, even during intended or unintended interruptions of the system. One or more batteries may be used for powering the controller. However, it is also possible to employ at least one of: a generator, a redundant power source, a power source independent of power sources of the power source of the geothermal heat mining system. In some examples, the pressure retaining unit comprises a dedicated power source. The power source may be dedicated from providing power to the pressure retaining unit, even under unintended operational interruptions (e.g. power cut, emergency, failing components, etc.).

It will be appreciated that retaining the pressure on the return line in case of an operational interruption of the geothermal heat mining system may be understood as providing a pressure to the return line for at least partially compensating for pressure losses. In some examples, the pressure retaining unit is configured to provide additional pressure to the return line in order to slow down the pressure drop over time. In some examples, the pressure retaining unit is configured to partially compensate for the pressure loss in the return line over time. In some examples, the pressure retaining unit is configured to completely compensate for the pressure loss in the return line, such that the pressure remains substantially constant or within a narrow predetermined range (cf. stable pressure).

It will be appreciated that the required flow rate for keeping the pressure in the return line constant depends on the draining rate of the return line, which in turn depends on geological properties of the location and where the geothermal installation is installed.

It will be appreciated that fluids other than brine or water may be reinjected but options may be limited due to considerations of chemical interactions and potential pollution of aquifers.

It will be appreciated that the energy recovered by the geothermal heat mining system may be effectively used for various purposes, such as but not limited to: generating electricity, heating and cooling buildings, desalinating water, producing hydrogen fuel and/or satisfying other human energy needs.

In this description wording like about and substantially should be understood as meaning that variations of a given value it refers to are allowable within the given definition, which variations can at least be 5%, preferably at least 10% and more preferably at least 15% of the given value.

Moreover in this document, relational terms such as first and second, and the like may be used solely to distinguish one entity or action from another entity or action without necessarily requiring or implying any actual such relationship or order between such entities or actions.

Although the procedures of for example the methods and processes described herein may be described in a particular order for ease of description, unless the context dictates otherwise, various procedures may be reordered, added, and/or omitted in accordance with various embodiments.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of operating a geothermal heat mining system, the heat mining system comprising a production line through which geothermal energy is conveyed towards the earth surface using a transfer medium, an energy recovery arrangement for recovering energy from the conveyed transfer medium by heat exchange, and a reinjection unit for injecting back, after heat exchange, the transfer medium into earth through at least one return line, wherein a pressure retaining unit is provided configured to retain pressure on the return line in case of an operational interruption of the geothermal heat mining system.

2. The method according to claim 1, wherein in case of the operational interruption, a fluid is injected in the at least one return line by means of the pressure retaining unit.

3. The method according to claim 1 or 2, wherein the pressure retaining unit is configured to modulate the pressure drop in time resulting from the operational interruption of the geothermal heat mining system.

4. The method according to claim 1, 2 or 3, wherein the pressure retaining unit is configured to keep the pressure within a predetermined range, for at least a predetermined period of time by injecting fluid into the at least one return line.

5. The method according to any one of the preceding claims, wherein the pressure retaining unit is configured to inject fluid into the at least one return line by means of a pneumatic arrangement.

6. The method according to claim 5, wherein the fluid employed for injection is a liquid, wherein the pneumatic arrangement comprises at least one tank configured to receive the liquid up to a predetermined maximum level such that the tank is partially filled with gas, wherein the pressure of the gas is regulated in order to achieve flow of liquid towards the at least one return line.

7. The method according to claim 6, wherein the return line is partially filled with gas at an upper side thereof, wherein during injection of liquid in the at least one return line, the pressure of gas inside the at least one tank is kept within a predefined range.

8. The method according to claim 6 or 7, wherein during injection of transfer medium in the at least one return line, the pressure of gas inside the at least one tank is kept substantially constant.

9. The method according to any one of the preceding claims 6-8, wherein when the liquid in the tank is below a predetermined minimum level, injection of liquid into the at least one return line is halted, and the tank is filled again with transfer medium up to the predetermined maximum level.

10. The method according to any one of the preceding claims 6-9, wherein two tanks are employed, wherein a second tank is used for injection of transfer medium inside the at least one return line when a first tank is being refilled, and/or vice versa.

11. The method according to claim 10, wherein only one of the first and second tanks is used at a same time for providing pressure to the return line in case of an operational interruption of the geothermal heat mining system.

12. The method according to any one of the preceding claims, wherein the fluid injected in the at least one return line is transfer medium which is recovered from the energy recovery arrangement through a dedicated branch line, branched off from one or more transfer medium lines of the energy recovery arrangement.

13. A system for operating a geothermal heat mining system, the heat mining system comprising a production line through which geothermal energy is conveyed towards the earth surface using a transfer medium, an energy recovery arrangement configured for recovering energy from the conveyed transfer medium by means of heat exchange, and a reinjection unit configured for pressing back, after heat exchange, the transfer medium into earth through at least one return line, wherein the system comprises a pressure retaining unit configured to provide pressure to the return line in case of an operational interruption of the geothermal heat mining system.

14. A pressure maintaining unit for use in a geothermal mining system, wherein the pressure maintaining unit is configured to, in case of an operational interruption of the geothermal heat mining system, provide pressure to at least one return line of a geothermal mining system through which transfer medium is reinjected into the earth surface.

15. A computer program product containing a set of instructions stored thereon that, when executed by a controller of the system according to claim 13, results in the system performing an automated control method according to any one of the claims 1-12.
